# EUROPÄISCHE PATENTSCHRIFT

(11) **EP 1 658 218 B1**
(45) Veröffentlichungstag und Bekanntmachung des Hinweises auf die Patenterteilung: **31.10.2007**
(21) Anmeldenummer: 04763919.0
(22) Anmeldetag: 09.08.2004
(51) Int. Cl.: B62D 25/04, B62D 31/00, B62D 27/02

(54) **SÄULE IN EINER TRAGSTRUKTUR EINES KRAFTFAHRZEUGS IN SPACEFRA ME-BAUWEISE**
POST IN A CARRIER STRUCTURE OF A MOTOR VEHICLE IN A SPACEFRAME STYLE
MONTANT DANS UNE STRUCTURE PORTEUSE DE VEHICULE AUTOMOBILE DE TYPE "SPACE FRAME"

(30) Priorität: 27.08.2003 DE 10339809; 14.10.2003 DE 10347556
(43) Veröffentlichungstag der Anmeldung: 24.05.2006
(73) Patentinhaber: ThyssenKrupp Steel AG, 47166 Duisburg (DE)
(72) Erfinder: FLÖTH, Thomas, 47249 Duisburg (DE); GRÜNEKLEE, Axel, 47259 Duisburg (DE); OSBURG, Bernhard, 47259 Duisburg (DE); PATBERG, Lothar, 47445 Moers (DE); SCHWARZ, Stefan, 44536 Lünen (DE)
(74) Vertreter: Knauf, Rudolf
(86) Internationale Anmeldenummer: PCT/EP2004/008894
(87) Internationale Veröffentlichungsnummer: WO 2005/021361

(56) Entgegenhaltungen:
- EP-A- 0 945 294
- EP-A- 1 172 454
- DE-A- 10 162 741
- DE-A- 19 651 658
- DE-A- 19 818 362
- US-A1- 2001 002 760
- US-B1- 6 302 478
- PATENT ABSTRACTS OF JAPAN Bd. 0092, Nr. 26 (M-412), 12. September 1985 (1985-09-12) -& JP 60 082485 A (NISSAN JIDOSHA KK), 10. Mai 1985 (1985-05-10)

## Beschreibung

Die Erfindung betrifft eine Tragstruktur eines Kraftfahrzeugs in Spaceframe-Bauweise mit einem Längs- und Querträger umfassenden Dachrahmen und beidseitigen auf Höhe des Fahrzeugbodens angeordneten Längsträgern aus Hohlprofilen sowie mit Säulen in Form von Hohlprofilen, welche die Längsträger des Dachrahmens mit den bodenseitigen Längsträgern verbinden, wobei mindestens zwei gegenüberliegende Säulen der Tragstruktur, insbesondere die B-, C- oder D-Säulen, aus innenhochdruckumgeformten Profilen gebildet sind, und die jeweiligen Enden der Säulen als der Form der bodenseitigen Längsträger und der Längsträger des Dachrahmens angepasste Anschlusszonen zur Anbindung an die bodenseitigen Längsträger und die Längsträger des Dachrahmens ausgebildet sind, wobei jeweils mindestens ein Säulenende zur Bildung seiner Anschlußzone in eine Ausnehmung eines der Längsträger eingesteckt ist

Tragstrukturen für Kraftfahrzeuge in Spaceframe-Bauweise weisen eine Vielzahl von Trägern und Säulen auf, die als Hohlprofile ausgebildet sind. Im Falle der Säulen stehen verschiedene Technologien zur Verfügung, um den Hohlprofilen die jeweils gewünschte Form zu verleihen. Die Ausbildung der Säulen aus Walzprofilen hat den Vorteil einer relativ kostengünstigen Fertigung, wobei durch den Einsatz sogenannter Tailored Strips das verwendete Material hinsichtlich seiner Stärke und Güte den Vorgaben des Anwenders angepasst werden kann. Zudem können Flansche für Dichtungen ohne großen Aufwand in das Profil integriert werden. Diesem Vorteilen steht jedoch der entscheidende Nachteil gegenüber, dass mit der Walztechnologie keine variablen Querschnitte möglich sind. Daraus folgt, dass der bei modernen Kraftfahrzeugen typische Verlauf einer Säule, beispielsweise der B-, C- oder D-Säule, mit einem in bezug auf die Crasheigenschaften des Fahrzeugs vorteilhaft großen Querschnitt im unteren Bereich und einem unter Design-Gesichtspunkten gewünschten schlanken Querschnitt oberhalb der Fensterbrüstung nicht dargestellt werden kann.

Der Einsatz sogenannter DAVEX-Profile, welche als Hohlprofile aus zwei gegenüberliegenden Gurten und zwei die Gurte verbindenden Stegen bestehen, bietet ebenfalls den Vorteil einer kostengünstigen Fertigung der Säulen. Zudem sind fertigungsbedingt mehrere Flansche zur Aufnahme von Dichtungen von vornherein vorhanden. Der Nachteil eines über die Länge konstanten Querschnittes ergibt sich jedoch auch bei diesen Profilen. Hinzu kommt, dass DAVEX-Profile nur mit einer Mindestmaterialdicke herstellbar sind, was zu einem unter Leichtbaugesichtspunkten nicht mehr akzeptablen Gewicht der Säule führt.

Nach einem weiteren bekannten Fertigungsansatz kann ein rohrförmiges Ausgangsprofil zur Erzeugung der Säule innenhochdruckumgeformt werden. Dabei ist ein sich über den Verlauf der Säule ändernder Querschnitt zwar begrenzt möglich, jedoch nur unter Inkaufnahme eines zu hohen Materialaufkommens in den Bereichen mit geringem Querschnitt, beispielsweise im Bereich oberhalb der Fensterbrüstung. Dieses überschüssige Material muss dann durch nach innen gerichtete Sicken versteckt werden, trägt jedoch mit zu einem insgesamt zu hohen Gewicht der Säule bei. Stärkere Querschnittsänderungen der Säule im Bereich des Anschlusses der Säule an die in Fahrzeuglängsrichtung verlaufenden Träger (Knotenbereich) lassen sich bei einem Hohlprofil durch Innenhochdruckumformen nicht erzeugen. Ein weiterer Nachteil ist, dass Flansche für Dichtungen in einem zusätzlichen Verfahrensschritt an den Hohlprofilen anzubringen sind. Schließlich ist es schwierig, an innenhochdruckumgeformten Hohlprofilen kompliziert geformte Anschlussbereiche unter Leichtbaugesichtspunkten herzustellen.

Bei einer bekannten Tragstruktur eines Kraftfahrzeuges in Spaceframe-Bauweise der eingangs genannten Art US 2001/0002760 A1, die den Oberbegriff des Anspruchs 1 bildet, werden die Säulen von flanschlosen unten offenen Hohlprofilen gebildet, deren jeweilige offene Enden der Form der bodenseitigen und dachseitigen Längsträger angepasst sind und ggf. unter Verwendung zusätzlicher Passtücke mit diesen Längsträgern verbunden sind. Eine solche Anbindung ist konstruktiv und fertigungstechnisch aufwendig und anbindungstechnisch nicht optimal. Darüber hinaus haben die Säulen nur Tragfunktion. Sollen Dichtungsprofile angebracht werden, dann dienen die Kanten der rechteckigen Profile der Säulen und der boden- und dachseitigen Längsträger bzw. daran angebrachte Leisten als Anlschläge für von an Türen angebrachte Dichtungsprofile.

Darüber hinaus sind bei einer Tragstruktur eines Kraftfahrzeuges Säulen bekannt, die von Doppelplatinen gebildet werden, deren Flansche Träger für Dichtungen bilden (EP 0 945 294 A1), die Anbindung dieser Säulen an die übrige Tragstruktur ist bei diesem Stand der Technik nicht behandelt.

Der Erfindung liegt die Aufgabe zugrunde, eine Tragstruktur eines Kraftfahrzeugs in Spaceframe-Bauweise zu schaffen, welche insbesondere im Bereich der Säulen ohne großen Aufwand an die Formvorgaben des Anwenders angepasst werden kann und sich durch ein hohes Maß an Steifigkeit und Crashsicherheit auszeichnet.

Diese Aufgabe wird mit einer Tragstruktur der eingangs genannten Art dadurch gelöst, dass die Hohlprofile der B-, C- oder D-Säulen aus an ihrem umlaufenden Rand verschweißten, durch das Innenhochdruckumformen zu Hohlprofilen aufgeweiteten Doppelplatinen gebildet sind, deren umlaufender Rand Flansche für Tür- und/oder Fensterdichtungen bildet, und dass zumindest einzelne Hohlprofile an ihren eingesteckten Enden geschlossen sind und Schottbleche in den Längsträgern bilden.

Bei der erfindungsgemäßen Tragstruktur weisen die als innenhochdruckumgeformte Doppelplatinen ausgebildeten Säulen eine große Variabilität hinsichtlich ihrer Formgebung auf. Damit lassen sie sich einfach in der vorgegebenen Form herstellen, ohne dass es weiterer Umformschritte bedarf. Darüber hinaus können die als Anschlusszonen ausgebildeten Säulenenden der Form und der relativen Lage des Längsträgers des Dachrahmens bzw. des bodenseitigen Längsträgers leicht angepasst werden. Damit ist eine sichere Anbindung der Säule an die Tragstruktur mittels hochsteifer Knotenstrukturen möglich, was maßgeblich zur Crashsicherheit der gesamten Tragstruktur beiträgt. Dabei wirken die eingesteckten geschlossenen Enden im unteren Träger als Schotten.

Mit dem umlaufenden Rand der zu einer Säule innenhochdruckumgeformten Doppelplatine sind zudem gut nutzbare Flansche für Tür- und Fensterdichtungen vorhanden. Die Flansche können als Anschlagfläche für eine Dichtung dienen, zweckmäßigerweise nehmen sie aber die Dichtung selbst auf.

Eine weiter verbesserte Crashsicherheit der Tragstruktur kann erreicht werden, wenn die beiden Platinen der Doppelplatine aus unterschiedlichen Werkstoffen bestehen. So kann beispielsweise die die äußere Seite der Säule bildende Platine aus einem hochfesten Stahl bestehen. Ebenso ist es unter Crash- und Leichtbaugesichtspunkten vorteilhaft, wenn mindestens eine der beiden Platinen der Doppelplatine aus einem Tailored Blank besteht. Durch den Einsatz von Tailored Blanks kann die Wandstärke und damit die Steifigkeit der Säule gezielt in den besonders crashgefährdeten Bereichen verstärkt werden, während in den weniger crashrelevanten Bereichen durch eine geringere Wandstärke Gewicht eingespart werden kann.

Bei der erfindungsgemäßen Tragstruktur ist es möglich, die Säulen mit einem sich über ihre Länge ändernden Querschnitt auszubilden, so dass, wie eingangs erwähnt, die Säulen im unteren, besonders crashgefährdeten Bereich einen großen Querschnitt, im oberen Bereich, d.h. oberhalb der Fensterbrüstung, einen entsprechend den Designvorgaben klein gewählten Querschnitt aufweisen.

Nach einer Ausgestaltung der Erfindung ist vorgesehen, dass jeweils mindestens eines der Säulenenden aufgeweitet ist. Durch die aufgeweiteten Säulenenden lassen sich großvolumige und damit besonders steife Knotenstrukturen in der erfindungsgemäßen Tragstruktur erzeugen.

Eine vorteilhafte Art der Anbindung der Säulen an die längs verlaufenden Profilelemente der Tragstruktur besteht darin, dass jeweils mindestens eines der Säulenenden in den ihm zugeordneten bodenseitigen Längsträger oder Längsträger des Dachrahmens eingesteckt und dort an den sich gegenüber liegenden Seitenflächen des jeweiligen Längsträgers, insbesondere an hier eingeformten Sicken, abgestützt ist. Dabei wirkt das eingesteckte Ende der Säule wie ein Schottblech und erhöht somit insbesondere die Torsionssteifigkeit des Längsträgers. Durch eine derartige Einstecklösung, welche sich besonders für die Verbindung der Säulen mit bodenseitigen Längsträgern, z.B. den Bodenschwellern, eignet, wird eine hochsteife Knotenstruktur erzeugt, durch die die Tragstruktur einen optimalen Insassenschutz bei einem Seitenaufprall gewährleistet. Zudem kann die Knotenstruktur derart ausgestaltet sein, daß ihr Crashverhalten dem einer Crashbox gleichkommt, also durch eine definierte Verformung gezielt zum Abbau der bei einem Aufprall wirkenden Kräfte beiträgt.

Nach einer weiteren Ausgestaltung der Erfindung ist vorgesehen, dass jeweils mindestens eines der Säulenenden beschnitten ist. Durch einen geeigneten Beschnitt werden an diesen Säulenenden Flansche erzeugt, über welche die Säule an Längsträger der Tragstruktur angelegt und mit ihnen verbunden werden kann. Diese Art der Anbindung ermöglicht eine besonders kompakte Knotenstruktur, die sich insbesondere für die Verbindung des oberen Säulenendes mit dem Längsträger des Dachrahmens eignet und eine ausreichende Steifigkeit aufweist. Zweckmäßigerweise liegt das mindestens eine beschnittene Säulenende an der Außenseite und mindestens einer weiteren Seite des ihm zugeordneten bodenseitigen Längsträgers oder Längsträgers des Dachrahmens an. Dadurch wird verhindert, dass die Säule bei einem heftigen Seitenaufprall, der beispielsweise zu einem Reißen von Schweißnähten oder ähnlichen Fügeverbindungen führt, mit ihrem einen Ende in den Fahrzeuginnenraum gedrückt wird, was bei den Insassen zu Verletzungen führen würde. Eine besonders sichere Anbindung wird dadurch erreicht, dass das mindestens eine beschnittene Säulenende den ihm zugeordneten Längsträger U-förmig umschließt.

Im folgenden wird die Erfindung anhand einer ein Ausführungsbeispiel darstellenden Zeichnung näher erläutert. Es zeigen:
- Fig. 1: eine aus Hohlprofilen zusammengesetzte Tragstruktur eines Kraftfahrzeugs in Spaceframe-Bauweise mit einem Dachrahmen, bodenseitigen Längsträgern und den Dachrahmen mit den Längsträgern verbindenden Säulen,
- Fig. 2 a-c: eine B-Säule der Tragstruktur der Fig. 1 in zweifacher Seitenansicht sowie in Schnittansicht gemäß der Linie II-II der Fig. 2a,
- Fig. 3 a,b: eine Knotenstruktur zur Anbindung der B-Säule der Fig. 2 an einen Längsträger des Dachrahmens der Tragstruktur der Fig. 1 in zweifacher Seitenansicht,
- Fig. 4 a,b: eine Knotenstruktur zur Anbindung der B-Säule der Fig. 2 an einen bodenseitigen Längsträger der Tragstruktur der Fig. 1 in zweifacher Ansicht sowie in Schnittansicht gemäß der Linie IV-IV der Fig. 4a,
- Fig. 5 a,b: eine D-Säule der Tragstruktur der Fig. 1 in zweifacher Seitenansicht,
- Fig. 6 a,b: eine Knotenstruktur zur Anbindung der D-Säule der Fig. 5 an einen Längsträger des Dachrahmens der Tragstruktur der Fig. 1 in zweifacher Seitenansicht und
- Fig. 7 a,b: eine Knotenstruktur zur Anbindung der D-Säule der Fig. 5 an einen bodenseitigen Längsträger der Tragstruktur der Fig. 1 in zweifacher Seitenansicht.

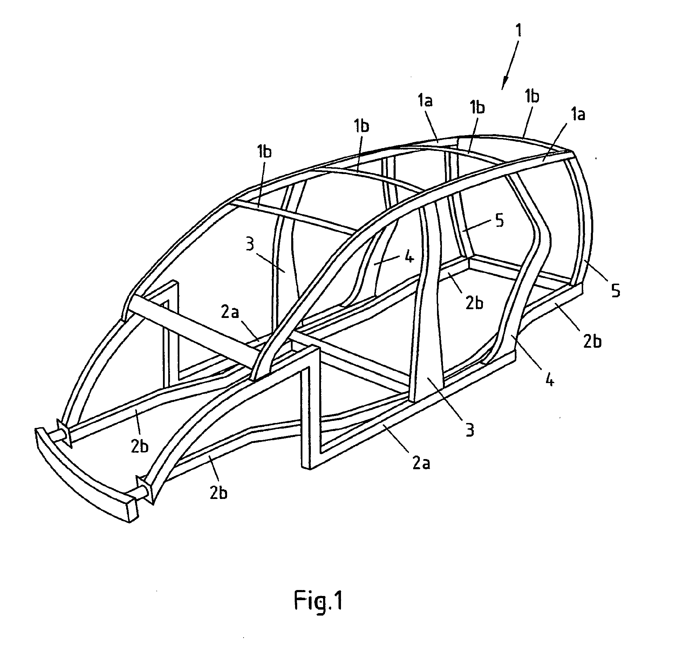

Die in der Fig. 1 dargestellte aus Hohlprofilen zusammengesetzte Tragstruktur umfasst einen Dachrahmen 1 mit Längs- und Querträgern 1a, 1b sowie beidseitige auf Höhe des Fahrzeugbodens angeordnete Längsträger 2a, 2b. Die in Fahrzeuglängsrichtung zentral angeordneten Längsträger 2a sind als Bodenschweller ausgebildet. Die Längsträger 2b erstrecken sich vom vorderen Stoßfänger bis zum Heckabschluss der Tragstruktur. Weiterhin umfasst die Tragstruktur drei Säulenpaare in Form von Hohlprofilen, nämlich die B-Säulen 3, die C-Säulen 4, sowie die D-Säulen 5, wobei die B- und C- Säulen 3, 4 den Dachrahmen 1 mit den Längsträgern 2a und die D-Säulen 5 den Dachrahmen 1 mit den Längsträgern 2b verbinden.

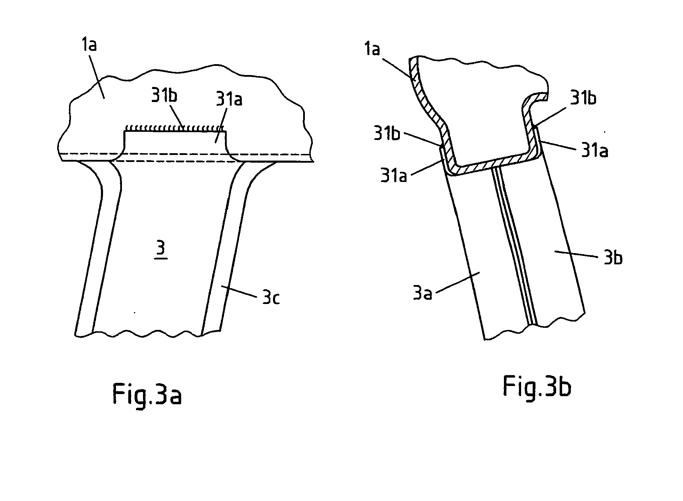

Wie am Beispiel der B- und D-Säule 3, 5 in den Fig. 3 bis 7 dargestellt, sind die Säulen 3, 4, 5 jeweils als an ihrem umlaufenden Rand verschweißte, innenhochdruckumgeformte Doppelplatinen ausgebildet, wobei der umlaufende Rand Flansche 3c, 5c für Tür- und/oder Fensterdichtungen bildet. Vorzugsweise nehmen die Flansche 3c, 5c selbst eine Dichtung auf. Dies gilt selbstverständlich auch für den umlaufenden Rand der - nicht im Detail dargestellten - C-Säule 4.

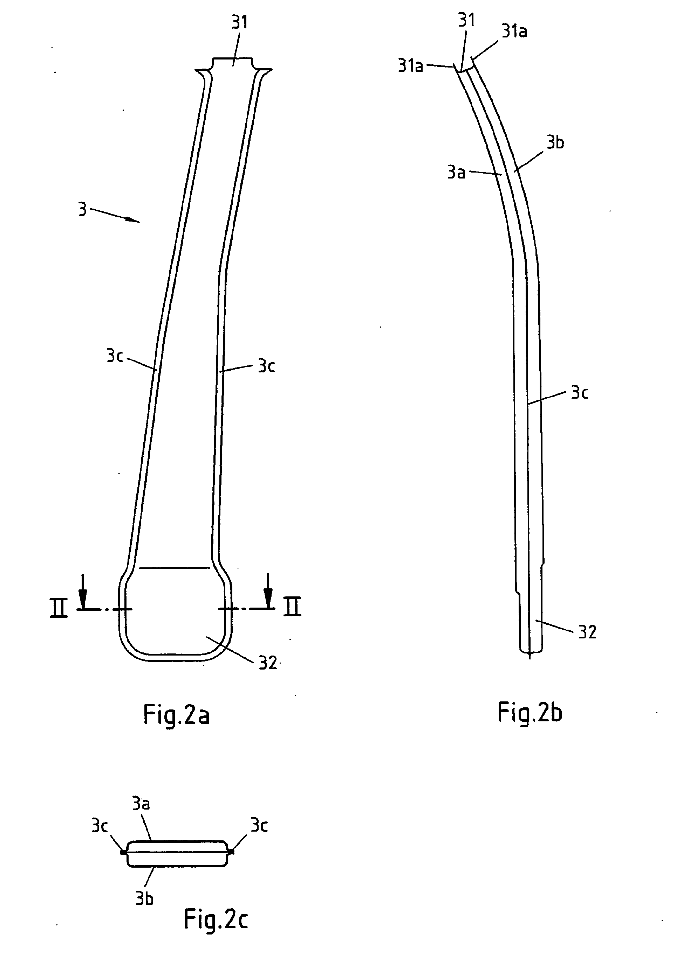

In Fig. 2 ist eine B-Säule 3 der Tragstruktur im Detail dargestellt. Durch Innenhochdruckumformen sind die beiden Platinen der Doppelplatine zu einer Innenschale 3a und einer Außenschale 3b mit einem gemeinsamen umlaufenden Rand umgeformt. Vorzugsweise bestehen die beiden Schalen 3a, 3b der Säule 3 aus unterschiedlichen Werkstoffen. So kann beispielsweise die bei einem Crash besonders belastete äußere Schale 3b der B-Säule 3 aus einem hochfesten Stahl bestehen. Ebenso kann eine der Schalen 3a, 3b oder auch beide aus jeweils einem Tailored Blank bestehen. Damit kann die Struktur in den besonders crashsensitiven Bereichen verstärkt werden, während in den weniger crashrelevanten Bereichen durch eine geringere Wandstärke Gewicht eingespart werden kann.

Wie insbesondere in Fig. 2b dargestellt, weist die B-Säule 3 einen sich über die Länge der Säule 3 ändernden Querschnitt auf. An ihrem oberen Ende ist die B-Säule 3 unter Ausbildung einer oberen Anschlusszone 31 aufgeweitet und beschnitten. Wie in den Fig. 3a und 3b detailliert dargestellt, weist die B-Säule 3 in ihrer oberen Anschlusszone 31 infolge des Beschnittes zwei parallele nach oben abstehende Flansche 31a auf, welche zur Anbindung der Säule an den Dachrahmen 1 einen Längsträger 1a des Dachrahmens 1 (ausschnittsweise dargestellt) U-förmig umschließen und mit diesem über Schweißnähte 31b verbunden sind. Dadurch wird ein sehr kompakter und ausreichend steifer Verbindungsknoten zwischen der B-Säule und dem Dachrahmen 1 gebildet.

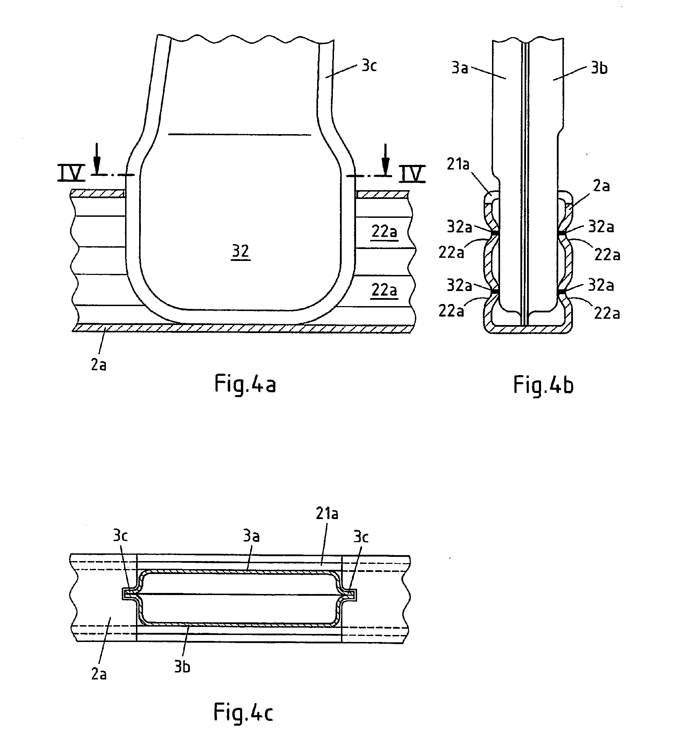

Wie insbesondere aus der Fig. 2a hervorgeht, ist die B-Säule 3 an ihrem unteren Ende unter Ausbildung einer weiteren Anschlusszone 32 in einer Dimension aufgeweitet. Die Anbindung der B-Säule 3 an einen Längsträger 2a der Tragstruktur ist in den Fig. 4 a-c dargestellt. Demnach ist die B-Säule 3 mit ihrer unteren Anschlusszone 32 in den Längsträger 2a durch eine in dessen Oberseite eingeformte Öffnung 21a eingesteckt. Um einen sicheren Halt der B-Säule 3 in dem Längsträger 2a zu gewährleisten, weist dieser an seinen beiden Seitenflächen jeweils zwei übereinander angeordnete, in Längsrichtung des Längsträgers 2a verlaufende Sicken 22a auf. Die innen liegenden Kuppen der sich paarweise gegenüber liegenden Sicken 22a sind dabei derart voneinander beabstandet, dass sie an den Schalen 3a, 3b der eingesteckten B-Säule 3 beidseitig spielfrei anliegen. An diesen Anlagepunkten ist die B-Säule 3 über Schweißnähte 32a mit dem Bodenschweller 2a fest verbunden. Dabei werden die Schweißnähte 32a vorzugsweise über ein Durchschweißen des Längsträgers 2a mit Laserstrahlung erzeugt.

Über die vorstehend beschriebene Art der Anbindung der B-Säule 3 an den Längsträger 2a, bei der das eingesteckte Ende der B-Säule im Längsträger 2a wie ein Schottblech wirkt, wird eine hochsteife Knotenstruktur gebildet, durch die die Tragstruktur ein hohes Maß an Sicherheit für die Fahrzeuginsassen im Falle eines Seitencrashs bietet.

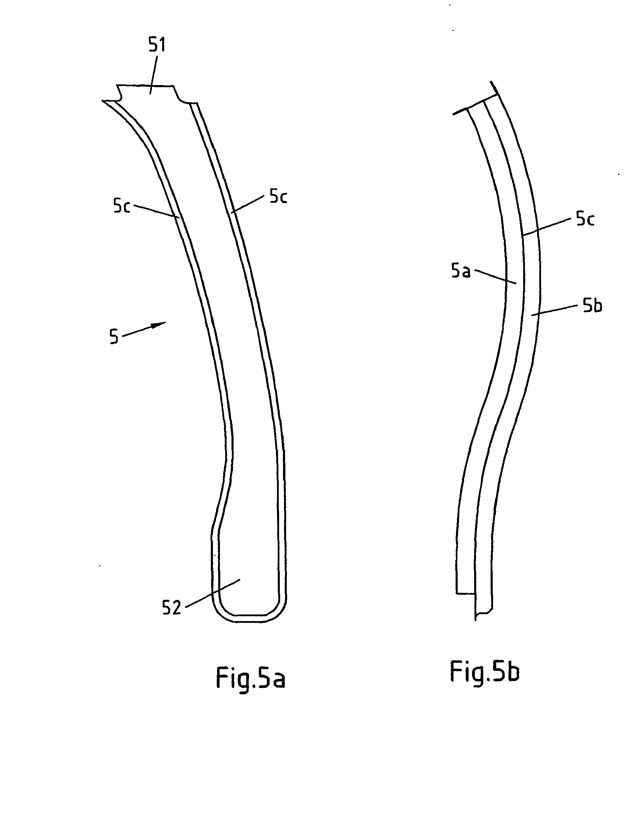

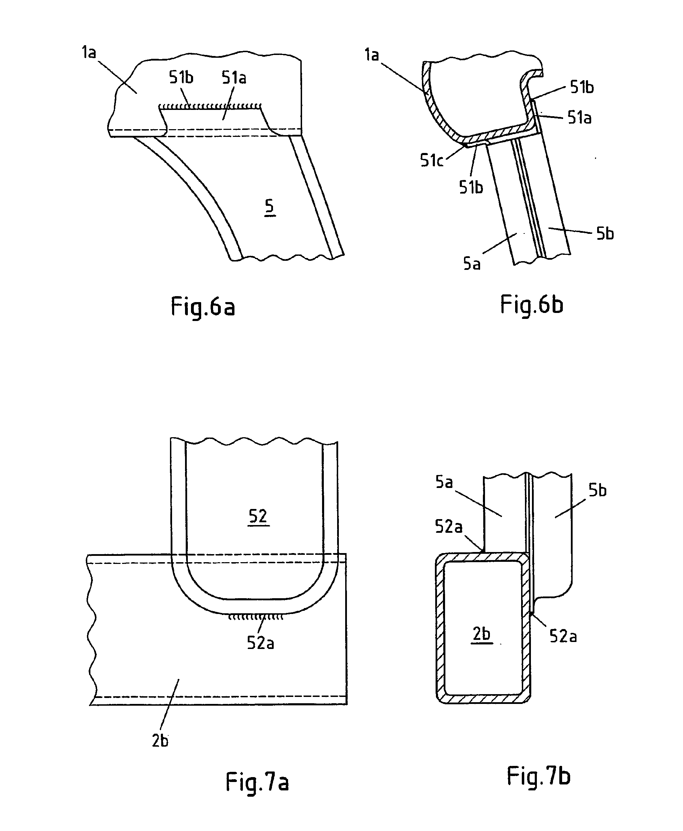

Fig. 5 zeigt eine D-Säule 5 der Tragstruktur. Diese weist ebenfalls einen sich über die Länge der Säule 3 ändernden Querschnitt auf und ist wie die vorstehend beschriebene B-Säule 3 an ihrem oberen Ende zur Ausbildung einer Anschlusszone 51 aufgeweitet und beschnitten. Wie in Fig. 6 im Detail dargestellt, weist die D-Säule 5 im Bereich ihrer oberen Anschlusszone 51 an der Außenschale 5b einen nach oben abstehenden Flansch 51a sowie an der Innenschale 5a einen um 90° umgebogenen, in Richtung des Fahrzeuginnenraums weisenden Flansch 51b auf. Beide Flansche 51a, 51b umschließen den ausschnittsweise dargestellten Längsträger 1a des Dachrahmens 1 L-förmig und sind mit ihm über Schweißnähte 51c verbunden.

Wie in den Figuren 5 und 7 dargestellt, ist das untere Ende der D-Säule 5 unter Ausbildung einer unteren Anschlusszone 52 aufgeweitet und teilweise beschnitten. Im einzelnen ist die Innenschale 5a der D-Säule 5 gegenüber der Außenschale 5b zurückgeschnitten, so dass die D-Säule 5 mit ihrer unteren Anschlusszone 52 den Bodenschweller 2a L-förmig umschließt. Zur Ausbildung eines steifen Verbindungsknotens ist die D-Säule 5 mit dem Längsträger 2a über Schweißnähte 52a fest verbunden.

## Patentansprüche

1. Tragstruktur eines Kraftfahrzeugs in Spaceframe-Bauweise mit einem Längs- (1a) und Querträger (1b) umfassenden Dachrahmen (1) und beidseitigen auf Höhe des Fahrzeugbodens angeordneten Längsträgern (2a, 2b) aus Hohlprofilen sowie mit Säulen (3, 4, 5) in Form von Hohlprofilen, welche die Längsträger (1a, 1b) des Dachrahmens (1) mit den bodenseitigen Längsträgern (2a, 2b) verbinden, wobei mindestens zwei gegenüberliegende Säulen (3, 4, 5) der Tragstruktur, insbesondere die B-, C- oder D-Säulen, aus innenhochdruckumgeformten Profilen gebildet sind, und die jeweiligen Enden der Säulen (3, 4, 5) als der Form der bodenseitigen Längsträger (2a, 2b) und der Längsträger (1a) des Dachrahmens (1) angepasste Anschlusszonen (31, 51, 32, 52) zur Anbindung an die bodenseitigen Längsträger (2a, 2b) und die Längsträger (1a) des Dachrahmens (1) ausgebildet sind, wobei jeweils mindestens ein Säulenende zur Bildung seiner Anschlußzone in eine Ausnehmung eines der Längsträger (2a, 2b, 1a) eingesteckt ist
**dadurch gekennzeichnet, dass** die Hohlprofile der B-, C- oder D-Säulen aus an ihrem umlaufenden Rand verschweißten, durch das Innenhochdruckumformen zu Hohlprofilen aufgeweiteten Doppelplatinen gebildet sind, deren umlaufender Rand Flansche (3c, 5c) für Tür- und/oder Fensterdichtungen bildet, und dass zumindest einzelne Hohlprofile an ihren eingesteckten Enden geschlossen sind und Schottbleche in den Längsträgern (2a, 2b, 1a) bilden.

2. Tragstruktur nach Anspruch 1,
**dadurch gekennzeichnet, dass** die beiden Platinen der Doppelplatine aus unterschiedlichen Werkstoffen bestehen.

3. Tragstruktur nach einem der Ansprüche 1 oder 2,
**dadurch gekennzeichnet, dass** mindestens eine der beiden Platinen der Doppelplatine aus einem Tailored Blank besteht.

4. Tragstruktur nach einem der Ansprüche 1 bis 3,
**dadurch gekennzeichnet, dass** die Säulen (3, 4, 5) einen sich über ihre Länge ändernden Querschnitt aufweisen.

5. Tragstruktur nach einem der Ansprüche 1 bis 4,
**dadurch gekennzeichnet, dass** jeweils mindestens eines der Säulenenden in den ihm zugeordneten bodenseitigen Längsträger (2a, 2b) oder Längsträger (1a) des Dachrahmens (1) eingesteckt und dort an den sich gegenüber liegenden Seitenflächen des jeweiligen Längsträgers (2a, 2b), insbesondere an hier eingeformten Sicken, abgestützt ist.

## Claims

1. Carrier structure of a motor vehicle in a spaceframe style, comprising a roof frame (1) provided with a longitudinal member (1a) and a cross member (1b), and longitudinal members (2a, 2b) made of hollow profiled elements arranged at both sides at the level of the vehicle floor, and with posts (3, 4, 5) in the form of hollow profiled elements, which connect the longitudinal members (1a, 1b) of the roof frame (1) with the floor-side longitudinal members (2a, 2b), whereby at least two opposing posts (3, 4, 5) of the carrier structure, in particular the B, C, or D posts, are formed from double plates formed by high internal pressure and the respective ends of the posts (3, 4, 5) are embodied as connection regions (31, 51, 32, 52) adapted to the shape of the floor-side longitudinal members (2a, 2b) and the longitudinal members (1a) of the roof frame (1) for connection to the floor-side longitudinal members (2a, 2b) and the longitudinal members (1a) of the roof frame (1), whereby in each case at least one of the post ends is inserted into an opening of one of the longitudinal members (2a, 2b, 1a) by forming its connection region, **characterised in that** the hollow profiled elements of the B, C and D posts are formed by double plates welded at their circumferential edges and expanded by the high internal pressure to the hollow profiled elements, the circumferential edge of which forms flanges (3c, 5c) for door seals and/or window seals, and that at least some hollow profiled elements are closed at their inserted ends and form bulkheads in the longitudinal members (2a, 2b, 1a).

2. Carrier structure according to Claim 1, **characterised in that** the two plates of the double plate arrangement are made of different materials.

3. Carrier structure according to Claim 1 or 2, **characterised in that** at least one of the two plates of the double plate arrangement consists of a tailored blank.

4. Carrier structure according to one of Claims 1 to 3, **characterised in that** the posts (3, 4, 5) exhibit a cross-section which changes over their length.

5. Carrier structure according to one of the Claims 1 to 4, **characterised in that** in each case at least one of the post ends is inserted into the floor side longitudinal member (2a, 2b) or longitudinal member (1a) of the roof frame located to it, and is supported there on the opposing side faces of the respective longitudinal member (2a, 2b), in particular at beads formed at their point.

## Revendications

1. Structure portante pour véhicule automobile, de type "spaceframe", qui présente un encadrement de toit (1) qui comprend des supports longitudinaux (1a) et des supports transversaux (1b) et des supports longitudinaux (2a, 2b) disposés des deux côtés à la hauteur du plancher du véhicule et constitués de profilés creux, ainsi que de colonnes (3, 4, 5) qui présentent la forme de profilés creux qui relient les supports longitudinaux (1a, 1b) de l'encadrement de toit (1) aux supports longitudinaux (2a, 2b) du plancher, au moins deux colonnes opposées (3, 4, 5) de la structure portante, et en particulier les colonnes B, C ou D, étant formées de profilés formés par haute pression interne, chacune des extrémités des colonnes (3, 4, 5) étant configurée comme zone de raccordement (31, 51, 32, 52) adaptée à la forme des supports longitudinaux (2a, 2b) du plancher et des supports longitudinaux (1a) de l'encadrement de toit (1), pour la liaison aux supports longitudinaux (2a, 2b) du plancher et aux supports longitudinaux (1a) de l'encadrement de toit (1), au moins une extrémité de colonne étant enfichée dans une découpe ménagée dans un des supports longitudinaux (2a, 2b, 1a) pour former sa zone de raccordement,
**caractérisée en ce que** les profilés creux des colonnes B, C ou D sont formés de plaques doubles soudées sur le bord périphérique, évasées en profilé creux par le façonnage sous haute pression intérieure et dont le bord périphérique forme des brides (3c, 5c) pour des joints d'étanchéité de portes et/ou de fenêtres, et **en ce qu'**au moins certains profilés creux sont fermés à leur extrémité enfichée et forment des tôles de fermeture dans les supports longitudinaux (2a, 2b, 1a).

2. Structure portante selon la revendication 1, **caractérisée en ce que** les deux plaques des plaques doubles sont constituées de matériaux différents.

3. Structure portante selon l'une des revendications 1 ou 2, **caractérisée en ce qu'**au moins l'une des deux plaques de la double plaque est constituée d'un flan découpé sur mesure.

4. Structure portante selon l'une des revendications 1 à 3, **caractérisée en ce que** les colonnes (3, 4, 5) présentent une section transversale qui varie suivant leur longueur.

5. Structure portante selon l'une des revendications 1 à 4, **caractérisée en ce qu'**au moins l'une des extrémités de colonne est enfichée dans le support longitudinal (2a, 2b) du plancher qui lui est associé ou dans le support longitudinal (1a) de l'encadrement de toit (1) et y est soutenue sur les surfaces latérales mutuellement opposées des supports longitudinaux (2a, 2b) concernés, en particulier sur des moulures qui y sont formées.
